Europäisches Patentamt

European Patent Office

Office européen des brevets

(11) Veröffentlichungsnummer: **0 196 509**
**A2**

## (12) EUROPÄISCHE PATENTANMELDUNG

(21) Anmeldenummer: **86103331.4**

(22) Anmeldetag: **12.03.86**

(51) Int. Cl.⁴: **H04N 5/46**

(30) Priorität: **23.03.85 DE 3510582**

(43) Veröffentlichungstag der Anmeldung:
**08.10.86 Patentblatt 86/41**

(84) Benannte Vertragsstaaten:
**AT DE FR GB IT**

(71) Anmelder: **Blaupunkt-Werke GmbH**
**Robert-Bosch-Strasse 200**
**D-3200 Hildesheim(DE)**

(72) Erfinder: **Schäfer, Thomas, Dipl.-Ing.**
**Gabelstrasse 9**
**D-3209 Schellerten 3(DE)**

(74) Vertreter: **Eilers, Norbert, Dipl.-Phys.**
**Blaupunkt-Werke GmbH Robert-Bosch-Strasse 200**
**D-3200 Hildesheim(DE)**

(54) Schaltungsanordnung zum Betrieb eines Fernsehwiedergabegerätes in zwei Betriebsarten.

(57) Bei einer Schaltungsanordnung zum Betrieb eines Fernsehwiedergabegerätes in zwei Betriebsarten, mit einem Generator zur wahlweisen Erzeugung zweier verschiedener Taktfrequenzen, ist ein frequenzbestimmendes Glied (3, 4) des Generators (2) mit Hilfe einer zugeführten Steuerspannung steuerbar. Die Steuerspannung weist während der ersten Betriebsart eine erste Größe und während der zweiten Betriebsart eine zweite Größe auf; bei der Umschaltung zwischen den Betriebsarten findet ein allmählicher Übergang zwischen beiden Größen statt. Damit wird ein Betrieb in beiden Betriebsarten und eine störungsfreie Umschaltung von einer zur anderen erreicht.

EP 0 196 509 A2

Schaltungsanordnung zum Betrieb eines Fernsehwiedergabegerätes in zwei Betriebsarten

Die Erfindung geht aus von einer Schaltungsanordnung nach der Gattung des Hauptanspruchs.

Beim Bildschirmtextbetrieb (Btx) sind zwei Betriebsarten des Fernsehwiedergabegerätes bekannt. Bei einer ersten Betriebsart werden zur möglichst flimmerfreien Darstellung von Texten und graphischen Abbildungen eine Bildwechselfrequenz von 60 Hz und eine Horizontalfrequenz von 18,75 KHz ohne Zeilensprung gewählt.

Bei einer zweiten Betriebsart, welche für gemischte Wiedergabe von Fernsehsignalen und Text bzw. graphischen Abbildungen vorgesehen ist, wird die im Fernsehrundfunk übliche Norm mit Zeilensprung, einer Bildwechselfrequenz von 50 Hz und einer Zeilenfrequenz von 15,625 KHz angewendet. Die Fernsehsignale können dabei von einem Sender, von einem Bildplattenspieler oder von einem Videorecorder stammen.

Zur Verarbeitung von Btx-Signalen sowie zur Erzeugung der den darzustellenden alphanumerischen Zeichen und Graphiksymbolen entsprechenden Videosignalen wurden integrierte Schaltungen (ICs) entwickelt -unter anderem von der Firma Valvo die integrierte Schaltungen SAA 5230 und SAA 5350. Dabei wird in dem IC SAA 5230 eine Taktfrequenz von 6 MHz erzeugt, welche dem IC SAA 5350 zur Ableitung der Zeilenfrequenz von 15,625 KHZ zugeführt wird.

Zur Erzeugung einer Zeilenfrequenz von 18,75 KHz für die obengenannte erste Betriebsart ist nun eine Taktfrequenz von 7,2 MHz erforderlich.

Aufgabe der Erfindung ist es, eine Schaltungsanordnung anzugeben, welche den Betrieb in den obengenannten Betriebsarten sowie eine störungsfreie Umschaltung zwischen den beiden Betriebsarten ermöglicht.

Die erfindungsgemäße Schaltungsanordnung mit den kennzeichnenden Merkmalen des Hauptanspruchs hat den Vorteil, daß ein Betrieb in den obengenannten Betriebsarten sowie eine störungsfreie Umschaltung ermöglicht wird, wobei der hierzu erforderliche technische Aufwand äußerst gering ist. Die in den Unteransprüchen aufgeführten Maßnahmen sind vorteilhafte Weiterbildungen und Verbesserungen der im Hauptanspruch angegebenen Schaltungsanordnung.

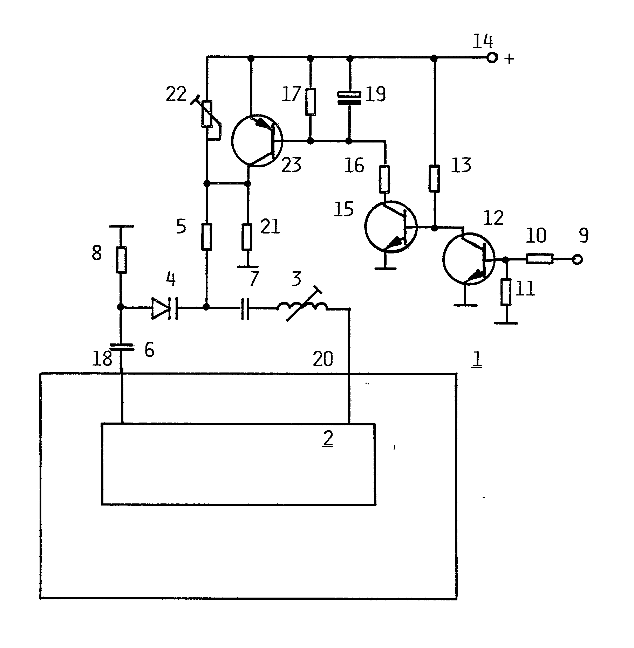

Ein Ausführungsbeispiel der Erfindung ist in der Zeichnung dargestellt und in der nachfolgenden Beschreibung näher erläutert.

In der Zeichnung stellt 1 schematisch eine integrierte Schaltung für den Btx-Betrieb dar, welche neben anderen Baugruppen einen Taktgenerator 2 enthält. Eine solche integrierte Schaltung stellt beispielsweise die Firma Valvo unter der Bezeichnung SAA 5230 her. An die Anschlüsse 18 und 20 sind extern Teile des frequenzbestimmenden Gliedes des Taktgenerators 2 angeschlossen, nämlich eine Induktivität 3 und eine Kapazitätsvariations-Diode 4. Die Kapazität der Kapazitätsvariations-Diode 4 kann mit Hilfe einer über den Widerstand 5 zugeführten Steuerspannung beeinflußt werden. Damit diese Steuerspannung nicht zum Generator selbst gelangt, sind die Kondensatoren 6 und 7 vorgesehen. Diese weisen jeweils eine Kapazität auf, welche groß im Verhältnis zur Kapazität der Kapazitätsvariations-Diode 4 ist; damit letztere im wesentlichen die Frequenz des aus der Induktivität 3 und der Kapazitätsvariations-Diode 4 bestehenden Schwingkreises bestimmt. Die Anode der Diode 4 ist über einen Widerstand 8 mit Massepotential verbunden.

Die über den Widerstand 5 zugeführte Steuerspannung soll nun während des Bertriebes in jeweils einer der Betriebsarten eine konstante Größe aufweisen, damit die erforderliche Taktfrequenz möglichst genau eingehalten wird und während der Umschaltung allmählich von einem Wert zu dem anderen übergeht. Hierzu wird die Steuerspannung aus dem bei 9 zugeführten Umschaltsignal mit der im folgenden beschriebenen Schaltungsanordnung abgeleitet:

Über einen Eingangsspannungsteiler, bestehend aus den Widerständen 10 und 11, wird das bei 9 zugeführte Umschaltsignal einem ersten Schalttransistor 12 zugeleitet. Dessen Kollektor, der mit einem Arbeitswiderstand 13 mit dem positiven Pol 14 einer nicht dargestellten Betriebsspannungsquelle verbunden ist, ist an die Basis eines zweiten Schalttransistors 15 angeschlossen. Dessen Kollektor ist mit einem Widerstand 16 verbunden, dessen vom Kollektor abgewandter Anschluß über eine Parallelschaltung aus einem Widerstand 17 und einem Kondensator 19 mit dem positiven Pol 14 der Betriebsspannungsquelle verbunden ist. An dem Verbindungspunkt der Widerstände 16 und 17 ist dann schließlich die Basis eines dritten Transistors 23 angeschlossen, dessen Kollektor über einen Widerstand 21 mit Massepotential und einen Widerstand 22 dem positiven Pol 14 der Betriebsspannungsquelle verbunden ist. Vom Kollektor des Transistors 23 wird die Steuerspannung über den Widerstand 5 der Kapazitätsvariations-Diode 4 zugeleitet.

Beim Betrieb des Fernsehwiedergabegerätes mit 18,75 KHz Zeilenfrequenz entspricht das bei 9 zugeführte Umschaltsignal Massepotential. Der Transistor 12 ist dann gesperrt, während der Transistor 15 leitend ist. Über ihn und den Widerstand 16 wird der Kondensator 19 aufgeladen. Nach Überwindung einer Schwellspannung des Transistors 23 wird dieser allmählich in den leitenden Zustand gesteuert. Die sich aus der Größe des Widerstandes 16 und der Kapazität des Kondensators 19 ergebende Zeitkonstante ist derart gewählt, daß die Dauer des Übergangs eine Vielzahl von Zeilenperioden beträgt. Danach befindet sich der Transistor 23 im leitenden Zustand und die bei 14 anliegende positive Betriebsspannung wird über den Widerstand 5 der Kapazitätsvariations-Diode 4 zugeführt.

Bei der Umschaltung auf die zweite Betriebsart, also auf eine Zeilenfrequenz von 15,625 KHz wird die Umschaltspannung positiv, so daß der Transistor 12 leitend und der Transistor 15 nichtleitend wird. Der Kondensator 19 entlädt sich dann über den Widerstand 17, wobei der Transistor 23 nach Durchfahren eines linearen Aussteuerbereichs schließlich gesperrt wird. Es wird dann der Kapazitätsvariations-Diode 4 über den Widerstand 5 ein durch die Werte der Widerstände 21 und 22 bestimmter Teil der Betriebsspannung zugeführt. Zur Einstellung dieser Spannung -und damit zur Einstellung der Frequenz des Generators 2 bei der zweiten Betriebsart -ist der Widerstand 22 als einstellbarer Widerstand ausgeführt. Die Frequenz von 7,2 MHz kann übrigens mit der Induktivität 3 abgeglichen werden.

Durch den allmählichen Übergang der Steuerspannung von einem Wert zum anderen wird erreicht, daß sich auch die Frequenz des Generators 2 allmählich ändert, so daß im Falle der Verwendung der integrierten Schaltungen SAA 5230 und SAA 5350 auch während der Übergangszeit Taktimpulse erzeugt werden, welche mäanderförmig sind.

Die erfindungsgemäße Schaltungsanordnung kann sowohl bei Fernsehempfängern, bei welchen also das Fernsehsignal auf einen hochfrequenten Träger moduliert zugeführt wird, oder bei Fernsehmonitoren, bei denen das Fernsehsignal im Basisband zugeführt wird, angewendet werden.

**Ansprüche**

1. Schaltungsanordnung zum Betrieb eines Fernsehwiedergabegerätes in zwei Betriebsarten, mit einem Generator zur wahlweisen Erzeugung zweier verschiedener Taktfrequenzen, dadurch gekennzeichnet, daß ein frequenzbestimmendes Glied (3, 4) des Generators (2) mit Hilfe einer zugeführten Steuerspannung steuerbar ist, daß die Steuerspannung während der ersten Betriebsart eine erste Größe und während der zweiten Betriebsart eine zweite Größe aufweist und daß bei der Umschaltung zwischen den Betriebsarten ein allmählicher Übergang zwischen beiden Größen vorgesehen ist.

2. Schaltungsanordnung nach Anspruch 1, dadurch gekennzeichnet, daß die Dauer des allmählichen Übergangs groß gegenüber einer Zeilenperiode ist.

3. Schaltungsanordnung nach Anspruch 2, dadurch gekennzeichnet, daß ein Tiefpaß (17, 19) zur Ableitung der Steuerspannung aus einem die Umschaltung des Fernsehwiedergabegerätes zwischen den beiden Betriebsarten kennzeichnenden Umschaltsignal vorgesehen ist.

4. Schaltungsanordnung nach Anspruch 3, dadurch gekennzeichnet, daß das Umschaltsignal über einen oder mehrere Transistorstufen (12, 15) einem R/C-Glied (16, 19) zuführbar ist und daß an das R/C-Glied (16, 19) die Basis eines Transistors (23) angeschlossen ist, dessen Kollektor mit dem frequenzbestimmenden Glied (3, 4) in Verbindung steht.

5. Schaltungsanordnung nach Anspruch 1, dadurch gekennzeichnet, daß das frequenzbestimmende Glied eine Kapazitätsvariations-Diode (4) enthält.

6. Schaltungsanordnung nach Anspruch 5, dadurch gekennzeichnet, daß die Kapazitätsvariations-Diode (4) über je einen Kondensator (6, 7) mit weiteren Teilen des Generators verbunden ist.

7. Schaltungsanordnung nach Anspruch 1, dadurch gekennzeichnet, caß das frequenzbestimmende Glied (3, 4) wahlweise auf 6 MHz und auf 7,2 MHz abstimmbar ist.

8. Schaltungsanordnung nach Anspruch 1, dadurch gekennzeichnet, daß eine erste Betriebsart für die Darstellung von Bildschirmtext mit einer Bildwechselfrequenz von 60 Hz und einer Zeilenfrequenz von 18,75 KHz ohne Zeilensprung und eine zweite Betriebsart zur Darstellung von Bildschirmtext, ggf. mit eingeblendeten Fernsehsignalen, mit einer Bildwechselfrequenz von 50 Hz und einer Zeilenfrequenz von 15,625 KHz mit Zeilensprung vorgesehen sind.

R.Nr. 1858